# EUROPEAN PATENT SPECIFICATION

(11) **EP 0 593 742 B1**
(45) Date of publication and mention of the grant of the patent: **23.09.1998**
(21) Application number: 93911252.0
(22) Date of filing: 05.05.1993
(51) Int. Cl.: F16B 37/08, B23P 11/02

(54) **METHOD OF AND DEVICE FOR MECHANICAL TENSIONING OF BOLTS, STUDS AND THE LIKE**
VERFAHREN UND VORRICHTUNG ZUM MECHANISCHEN SPANNEN VON BOLZEN, STIFTEN UND DERGLEICHEN
PROCEDE ET DISPOSITIF DESTINE A SOUMETTRE A UNE TENSION MECANIQUE DES BOULONS, DES GOUJONS ET ANALOGUE

(30) Priority: 07.05.1992 US 879342; 22.04.1993 US 51478
(43) Date of publication of application: 27.04.1994
(60) Divisional application: 97121534.8
(73) Proprietor: Junkers, John K., Saddle River New Jersey 07540 (US)
(72) Inventor: Junkers, John K., Saddle River New Jersey 07540 (US)
(74) Representative: Newby, John Ross
(86) International application number: US9304465
(87) International publication number: WO9322568

(56) References cited:
- GB-A- I2 692
- GB-A- 120 642
- US-A- 443 117
- US-A- 794 781
- US-A- 3 383 973
- US-A- 3 435 777
- US-A- 3 565 472
- US-A- 5 137 408
- US-A- 5 152 649

## Description

### Technical Field

The present invention relates to a method of mechanical tensioning of bolts, studs and the like and also to a device for mechanical tensioning the same. More particularly, it relates to a method of and a device for mechanical tensioning of bolts, studs and the like, which are arranged in an object, such as for example a flange and the like.

### Background Art

Methods and devices for tensioning of the above mentioned general type are known in the art. For example, a mechanical nut is utilized, which has two elements movable relative to one another in opposite axial directions to elongate or relax a bolt, a stud and the like. There are many applications where no gaskets are used to seal the two flange portions or where the stud is oversized relative to the required clamping force. Therefore with a steel-to-steel flange connection there is no compression feasible, and with an oversize stud there is no stud elongation feasible, and thus the axial movement of one of the parts of the thusly formed nut becomes impossible.

US-A-3 565 472 discloses an assembly for tensioning a stud, in which a friction element is located between the end of a nut and an object to be assembled, the element being splined to a sleeve threaded in the nut and to the bolt.

### Disclosure of Invention

Accordingly, it is an object of the present invention to provide a method of and a device for mechanical tensioning of bolts, studs and the like, which avoids the disadvantages of the prior art.

In keeping with these objects and with others which will become apparent hereinafter, one aspect of the present invention comprises a method of elongating and relaxing a stud, as defined by claim 1.

In accordance with another aspect of the present invention is provided a mechanical tensioning device as defined by claim 7.

When the method is performed and the device is designed in accordance with the present invention, the desired elongation of the stud is obtained in a reliable manner, the required clamping force is applied to the object such as a flange or the like, and all parts of the device form a unitary structure in which the components cannot move relative to one another and a reliable clamping of all components with one another is provided.

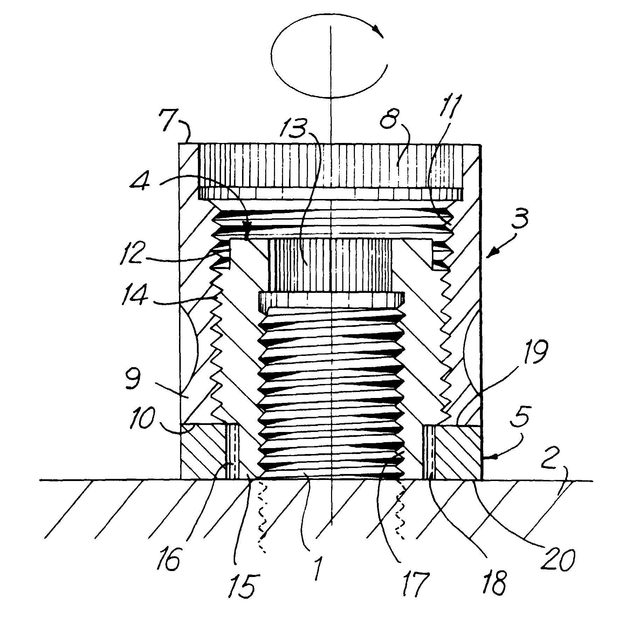

The invention, both as to its construction and its method of operation, together with additional objects and advantages thereof, will be best understood from the following description of specific embodiments when read in connection with the accompanying drawing.

### Brief Description of the Drawing

The single Figure of the drawing is a view showing a cross-section of a device for mechanical tensioning a stud, in accordance with the present invention which implements a new method of mechanical tensioning in accordance with the present invention.

### Best Mode of Carrying out the Invention

A method of and a device D for mechanical tensioning in accordance with the present invention is used for elongating and relaxing a stud 1 which is arranged in an outside object such as a flange 2 and the like. In accordance with the invention, the stud 1 is engaged by an inner part which is identified as a whole with reference numeral 4 and is movable only in an axial direction to pull the stud in the axial direction so as to elongate it and thereby to tension it in the object, or to relax the stud as will be explained hereinbelow. The inner part 4 is moved only in the axial direction by means of an outer part 3 which is connected with the inner part 4 and is rotatable about the axis of the stud, and by means of a friction element 5 which cooperates with at least one of the parts 3 and 4 so as to change friction between the parts 3 and 4 as will be explained hereinbelow.

The outer part 3 as an end portion 7 facing away from the flange 2 and provided with engaging formations, for example splines 8, to be engaged by a tool. The outer part 3 also has a portion 9 which faces toward the flange 2 and has a surface 10 arranged to abut against the friction element 5. Finally, the outer part 3 has an inner thread 11. The outer part 3 is formed as a tubular member provided with the above specified formations.

The inner part 4 has an end portion 12 which faces away from the flange 2 and is provided with a plurality of engaging formations, for example splines 13, to be engaged by a tool. It also has an outer surface provided with a thread 14 which engages with the thread 11 of the inner surface of the outer part 3. The inner part 4 has a portion 15 which is located inside the cooperating part 5 and has an outer surface provided with engaging formations, for example splines 16. Finally, the inner part 4 has an inner surface provided with engaging formations formed for example as an inner thread 17, for engaging with the stud 1. The inner part 4 is also formed as a tubular member.

The friction element 5 is disc-shaped. It is to be located between the end portion 9 of the outer part 3 and the flange 2 on the one hand, and surrounds the portion 15 of the inner part 4 on the other hand. The friction element 5 has an inner surface provided with a plurality of engaging formations, for example splines 18, which engage with the splines 16 of the portion 15 of the inner part 4. The friction element 5 has a surface 19 against which the surface 10 of the outer part 3 abuts, and also an opposite surface 20 which abuts against the outer surface of the flange 2.

The thread 11 of the outer part 3 and the thread 14 of the inner part 4 have one directional sense, while the thread 17 of the inner part 4 has the opposite directional sense. For example, the thread 17 can be a right-hand thread, while the threads 11 and 14 can be left-hand threads.

The connecting means 11, 14 connecting the inner part 4 with the outer part 3 is thread means, while the connecting means 16, 18 for connecting the inner part 4 with the friction element 5 can be spline means. These connecting means 11, 14 and 16, 18 are axially spaced from one another.

It can be said that the inner part 4 has four surfaces cooperating with other parts and subjectable to friction. In particular, it has the surface of the inner thread 17, the surface of the outer thread 14, the surface abutting against the friction element 5, and the end surface abutting against the flange 2. In contrast, the outer part 3 has only two surfaces which are subjectable to friction, namely the surface of the inner thread 11, and the surface 19 abutting against the friction element 5.

In order to elongate or relax the stud 1 in accordance with the present invention, a tool (not shown) is applied so that it engages the splines 8 of the outer part 3 to move the latter and also engages the splines 13 of the inner part so as to at least hold the part 4. When the outer part 3 is moved to rotate about the axis of the device D and the stud, in a direction to tension the stud, its surface 10 abuts against the surface 19 of the friction element 5 and therefore the outer part 3 cannot move further onto the friction element 5 in the axial direction. Under the action of turning of the outer part 3 and due to the cooperation between the threads 11, 14, the inner part 4 is displaced in the axial direction, upwardly in the drawing, and at the same time does not turn around the axis. During these movements the friction element 4 is neither displaced by being turned around the axis nor in the axial direction. It is immovable relative to the flange 2. The axial upward displacement of the inner part 4 without the turning around the axis causes pulling of the stud 1 upwardly and therefore it is elongating.

Thus due to the cooperation of the parts 3 and 4 and the friction element 5 which imparts a higher frictional drag on the inner part 4 than on the outer part 3, when a force is applied to one of the parts 3, 4 in a rotational direction about the axis (by applying a force to one part, by holding one part and turning another part or by applying a turning force to both parts in opposite directions with equal forces), after elimination of the gaps in the assembly the outer part 3 rotates while the inner part 4 moves only in the axial direction to pull the stud 1 upwardly in the axial direction. When the stud 1 is elongated, a substantial clamping force is applied to the flange 2, so that the parts 3, 4, the friction element 5 and the stud 1 cannot move rotationaly or axially relative to the flange 2 and vice versa, so that unitary structure is produced with all components which are immovably clamped with one another.

While the invention has been illustrated and described as embodied in a method of and a device for mechanical tensioning of studs it is not intended to be limited to the details shown, since various modifications and structural changes may be made without departing in any way from the scope of the invention as defined by the following claims.

## Claims

1. A method of elongating and relaxing a stud (1) having an axis and arranged in an object (2), the method comprising the steps of connecting the stud (1) with a first part (4) of a tensioning device which is movable only in an axial direction of the stud so as to pull the stud (1) in the axial direction to elongate the stud (1) and thereby to tension it in the object (2) or to reduce the pull on the stud and thereby to relax the stud (1); and moving the first part (4) only in the axial direction by connecting the first part (4) with a second part (3) of the tensioning device which is rotatable about said axis; engaging a friction element (5) with at least one of the first and second parts (3, 4) so that one of the parts (4) has a higher frictional resistance to motion than the other of the parts (3) and so that the second part (3) is not firmly engaged with the friction element (5) but instead is freely turnable relative to the friction element (5) while freely abutting against the latter (5); and applying a force to at least one of the parts (3, 4) of the tensioning device whereby the second part (3) is rotated and the first part (4) is moved only in the axial direction to move the stud (1) in the axial direction so as to elongate the stud (1) and apply to the object (2) a clamping force so that the two parts (3, 4), the stud (1) and the friction element (5) cannot rotate or move axially relative to an object (2) surface and vice versa, and a unitary structure is produced with all components which are immovably clamped with one another, characterised in that a holding force is applied to the first part (4) via first engaging means (13) at an end portion of the first part spaced from the friction element (5) and simultaneously an opposite active force is applied to the second part (3) via second engaging means (8) on the second part.

2. A method as defined in claim 1, wherein the connecting of the first part (4) with the stud (1) is performed by first thread means (17) and the connecting of the second part (3) with the first part (4) is performed by second thread means.

3. A method as defined in claim 1, and further comprising the step of arranging the friction element (5) between the object (2) and an end portion of the second part (3) which faces the object (2) so that the friction element (5) surrounds an end portion (15) of the first part (4) which faces the object (2).

4. A method as defined in claim 1, wherein the active force is applied by engaging the second part (3) by a tool and moving the second part (3) by a tool about said axis.

5. A method as defined in claim 1, wherein the holding force is applied by engaging the first part (4) by a tool and holding the first part (4) immovably against rotation.

6. A method as defined in claim 1, and further comprising the step of providing first connecting means (11, 14) for connecting the first part (4) with the second part (3) so that the second part (3) moves about said axis, and second connecting means (16, 18) axially spaced from the first connecting means (11, 14) and connecting the first part (4) with the friction element (5) so that the first part (4) moves only in the axial direction.

7. A mechanical tensioning device for elongating and relaxing a stud (1) having an axis and arranged in an object (2), which device comprises a first part (4) connectable with said stud (1) to pull said stud (1) and movably only in an axial direction to elongate said stud (1) and thereby to tension it in said object (2), or to relax said stud (1); and means for moving said first part (4) in the axial direction and including a second part (3) connected with said first part (4) and rotatable about said axis, and a friction element (5) which engages with at least one of said parts (3, 4) so as to increase frictional drag between said parts (3, 4) so that one of said parts (4) has a higher frictional resistance to motion than the other of said parts (3), said second part (3) not being firmly engaged with said friction element (5) but being freely turnable relative to said friction element (5) while freely abutting against the latter (5), so that when a turning force is applied to at least one of said parts (3, 4), said second part (3) rotates and said first part (4) moves only in said axial direction to move said stud (1) in said axial direction so as to elongate said stud (1) and apply to the object (2) a clamping force so that the two parts (3, 4), the stud (1) and the friction element (5) cannot rotate or move axially relative to the object (2) and vice versa, and a unitary structure is produced with all components which are immovably clamped with one another, characterised in that said first part (4) has first engaging means (13) at an end portion of the first part spaced from the friction element (5), via which first engaging means a holding force can be applied to the first part (4), and in that said second part (3) has second engaging means (8) thereon, via which an opposite active force can simultaneously be applied to the second part (3).

8. A tensioning device as defined in claim 7, and further comprising first connecting means (17) which connect said first part (4) with the stud (1) and second connecting means (11, 14) which connect said second part (3) with said first part (4), said connecting means being formed as threads (17; 11, 14) having opposite directional senses.

9. A tensioning device as defined in claim 7, wherein said friction element (5) has a first means (18) formed so that said first part (4) moves in said axial direction relative to said friction element (5) and does not rotate relative to said friction element (5), and second means (19) formed so that said second part (3) can rotate relative to said friction element (5), but said second means (19) stops movement of said second part (3) by engaging onto said friction element (5) in said axial direction.

10. A tensioning device as defined in claim 9, wherein said first means (18) of said friction element (5) includes a plurality of splines (18) extending in an axial direction.

11. A tensioning device as defined in claim 9, wherein said second means of said friction element (5) includes an abutment surface (19) facing toward said second part (3) so that said second part (3) abuts against said abutment surface (19) when it is moved in said axial direction onto said friction element (5).

12. A tensioning device as defined in claim 7, wherein each of said parts (3, 4) has an end portion (9, 15) arranged to face the object (2), said friction element (5) being located between said end portion (9) of said second part (3) and the object (2) and surrounds said end portion (15) of said first part (4).

13. A tensioning device as defined in claim 7, wherein the second engaging means of the second part (3) comprise means (8) for engaging by a tool for moving said second part (3) about said axis.

14. A tensioning device as defined in claim 7, wherein the first engaging means of the first part (4) comprise means (13) for engaging by a tool so as to at least hold said first part (4) immovable against rotation.

15. A tensioning device as defined in claim 7, wherein said second part (3) has a threaded inner surface (11), said friction element (5) having a polygonal inner surface, said first part (4) having an outer surface with two axially spaced portions including a first cylindrical axial portion (14) which is threaded and engages with said threaded inner surface (11) of said second part (3) and a second axial portion (15) which is polygonal and engages with said polygonal inner surface of said friction element (5).

16. A tensioning device as defined in claim 7, and further comprising first connecting means (11, 14) for connecting said first part (4) with said second part (3) so that said second part (3) moves about said axis; and second connecting means (16, 18) axially spaced from said first connecting means (11, 14) and connecting said first part (4) with said friction element (5) so that said first part (4) moves in said axial direction.

17. A tensioning device as defined in claim 7, wherein, when at least one of said first and second parts (3, 4) is engaged and held by a tool, the other of said parts (4, 3) can also be engaged and turned there-by.

## Patentansprüche

1. Verfahren zum Dehnen und Entspannen eines Stifts, der eine Achse aufweist und in einem Gegenstand (2) angeordnet ist, wobei das Verfahren die folgenden Schritte umfaßt: Verbinden des Stifts (1) mit einem ersten Teil (4) einer Spannvorrichtung, das nur in einer Axialrichtung des Stifts bewegbar ist, um den Stift (1) in die Axialrichtung zu ziehen, um ihn zu dehnen und dadurch in dem Gegenstand (2) zu spannen oder um den Zugkraft an dem Stift zu reduzieren und dadurch den Stift (1) zu entspannen und Bewegen des ersten Teils (4) nur in die Axialrichtung durch Verbinden des ersten Teils (4) mit einem zweiten Teil (3) der Spannvorrichtung, das um die Achse drehbar ist; derartiges Ineingriffbringen eines Reibungselements (5) mit dem ersten und/oder zweiten Teil (3, 4), daß eines (4) der Teile einen größeren Reibungswiderstand gegenüber Bewegung aufweist als das andere (3) der Teile, und daß das zweite Teil (3) nicht fest mit dem Reibungselement (5) in Eingriff steht, sondern stattdessen bezüglich des Reibungselements (5) frei drehbar ist, während es frei an letzteres (5) anstößt; und Anlegen einer Kraft an mindestens eines der Teile (3, 4) der Spannvorrichtung, wodurch das zweite Teil (3) gedreht wird und das erste Teil (4) nur in die Axialrichtung bewegt wird, um den Stift (1) in die Axialrichtung zu bewegen, um den Stift (1) zu dehnen und an den Gegenstand (2) eine Klemmkraft anzulegen, so daß sich die beiden Teile (3, 4), der Stift (1) und das Reibungselement (5) nicht drehen oder bezüglich einer Fläche des Gegenstands (2) axial bewegen können und umgekehrt, und eine eine Einheit bildende Struktur mit allen Komponenten erzeugt wird, die unbewegbar aneinandergeklemmt sind, dadurch gekennzeichnet, daß über ein erstes Eingriffsmittel (13) an das erste Teil (4) an einem Endteil davon, der von dem Reibungselement (5) beabstandet ist, eine Haltekraft angelegt wird und gleichzeitig über ein zweites Eingriffsmittel (8) an dem zweiten Teil eine entgegengesetzte Wirkkraft an das zweite Teil (3) angelegt wird.

2. Verfahren nach Anspruch 1, bei dem das Verbinden des ersten Teils (4) mit dem Stift (1) durch ein erstes Gewindemittel (17) und das Verbinden des zweiten Teils (3) mit dem ersten Teil (4) durch ein zweites Gewindemittel ausgeführt wird.

3. Verfahren nach Anspruch 1, und weiterhin mit dem Schritt des derartigen Anordnens des Reibungselements (5) zwischen dem Gegenstand (2) und einem Endteil des zweiten Teils (3), der dem Gegenstand (2) gegenüberliegt, daß das Reibungselement (5) einen Endteil (15) des ersten Teils (4), der dem Gegenstand (2) gegenüberliegt, umgibt.

4. Verfahren nach Anspruch 1, bei dem die Wirkkraft durch Ineingriffnahme des zweiten Teils (3) durch ein Werkzeug und Bewegen des zweiten Teils (3) durch ein Werkzeug um die Achse angelegt wird.

5. Verfahren nach Anspruch 1, bei dem die Haltekraft durch die Ineingriffnahme des ersten Teils (4) durch ein Werkzeug und Festhalten des ersten Teils (4), so daß es sich nicht drehen kann, angelegt wird.

6. Verfahren nach Anspruch 1, und weiterhin mit dem Schritt des Bereitstellens eines ersten Verbindungsmittels (11, 14) zum derartigen Verbinden des ersten Teils (4) mit dem zweiten Teil (3), daß sich das zweite Teil (3) um die Achse bewegt, und eines zweiten Verbindungsmittels (16, 18), das axial von dem ersten Verbindungsmittel (11, 14) beabstandet ist und das erste Teil (4) derart mit dem Reibungselement (5) verbindet, daß sich das erste Teil (4) nur in die Axialrichtung bewegt.

7. Mechanische Spannvorrichtung zum Dehnen und Entspannen eines Stifts (1), der eine Achse aufweist und in einem Gegenstand (2) angeordnet ist, wobei die Vorrichtung folgendes umfaßt: ein erstes Teil (4), das zum Ziehen des Stifts (1) mit diesem verbindbar und nur in eine Axialrichtung bewegbar ist, um den Stift (1) zu dehnen und ihn dadurch in dem Gegenstand (2) zu spannen, oder um den Stift (1) zu entspannen; und ein Mittel zum Bewegen des ersten Teils (4) in die Axialrichtung und mit einem zweiten Teil (3), das mit dem ersten Teil (4) verbunden ist und um die Achse drehbar ist, und ein Reibungselement (5), das mindestens eines der Teile (3, 4) derart in Eingriff nimmt, daß der Reibwiderstand zwischen den Teilen (3, 4) so erhöht wird, daß eines der Teile (4) einen größeren Reibungswiderstand gegenüber Bewegung aufweist als das andere (3) der Teile, wobei das zweite Teil (3) nicht fest mit dem Reibungselement (5) in Eingriff steht, sondern stattdessen bezüglich des Reibungselements (5) frei drehbar ist, während es frei an letzteres (5) anstößt, so daß bei Anlegen einer Drehkraft an mindestens eines der Teile (3, 4) das zweite Teil (3) gedreht wird und das erste Teil (4) nur in die Axialrichtung bewegt wird, um den Stift (1) in die Axialrichtung zu bewegen, um den Stift (1) zu dehnen und an den Gegenstand (2) eine Klemmkraft anzulegen, so daß sich die beiden Teile (3, 4), der Stift (1) und das Reibungselement (5) nicht drehen oder bezüglich des Gegenstands (2) axial bewegen können und umgekehrt, und eine eine Einheit bildende Struktur mit allen Komponenten erzeugt wird, die unbewegbar aneinandergeklemmt sind, dadurch gekennzeichnet, daß das erste Teil (4) an einem Endteil davon, der von dem Reibungselement (5) beabstandet ist, ein erstes Eingriffsmittel (13) aufweist, über das eine Haltekraft an das erste Teil (4) angelegt werden kann, und daß das zweite Teil (3) daran ein zweites Eingriffsmittel (8) aufweist, über das eine entgegengesetzte Wirkkraft gleichzeitig an das zweite Teil (3) angelegt werden kann.

8. Spannvorrichtung nach Anspruch 7, und weiterhin mit einem ersten Verbindungsmittel (17), das das erste Teil (4) mit dem Stift (1) verbindet, und einem zweiten Verbindungsmittel (11, 14), das das zweite Teil (3) mit dem ersten Teil (4) verbindet, wobei die Verbindungsmittel als Gewinde (17; 11, 14) mit entgegengesetzten Gangrichtungen ausgebildet sind.

9. Spannvorrichtung nach Anspruch 7, bei der das Reibungselement (5) ein erstes Mittel (18), das so ausgebildet ist, daß sich das erste Teil (4) in die Axialrichtung bezüglich des Reibungselements (5) bewegt und sich nicht bezüglich des Reibungselements (5) dreht, und ein zweites Mittel (19), das so ausgebildet ist, daß sich das zweite Teil (3) bezüglich des Reibungselements (5) drehen kann, aber das zweite Mittel (19) eine Bewegung des zweiten Teils (3) durch Angreifen an das Reibungselement (5) in die Axialrichtung stoppt, aufweist.

10. Spannvorrichtung nach Anspruch 9, bei der das erste Mittel (18) des Reibungselements (5) mehrere sich in eine Axialrichtung erstreckende Keilzähne (18) aufweist.

11. Spannvorrichtung nach Anspruch 9, bei der das zweite Mittel des Reibungselements (5) eine Stoßfläche (19) aufweist, die zu dem zweiten Teil (3) weist, so daß das zweite Teil (3) an die Stoßfläche (19) anstößt, wenn es in die Axialrichtung an das Reibungselements (5) bewegt wird.

12. Spannvorrichtung nach Anspruch 7, bei der jedes der Teile (3, 4) einen Endteil (9, 15) aufweist, der dem Gegenstand (2) gegenüberliegend angeordnet ist, wobei das Reibungselement (5) zwischen dem Endteil (9) des zweiten Teils (3) und dem Gegenstand (2) angeordnet ist und den Endteil (15) des ersten Teils (4) umgibt.

13. Spannvorrichtung nach Anspruch 7, bei der das zweite Eingriffsmittel des zweiten Teils (3) ein Mittel (8) zur Ineingriffnahme durch ein Werkzeug zum Bewegen des zweiten Teils (3) um die Achse aufweist.

14. Spannvorrichtung nach Anspruch 7, bei der das erste Eingriffsmittel des ersten Teils (4) ein Mittel (13) zur derartigen Ineingriffnahme durch ein Werkzeug aufweist, daß mindestens das erste Teil (4) so festgehalten wird, daß es sich nicht drehen kann.

15. Spannvorrichtung nach Anspruch 7, bei der das zweite Teil (3) eine Gewindeinnenfläche (11) aufweist, wobei das Reibungselement (5) eine polygonale Innenfläche und das erste Teil (4) eine Außenfläche mit zwei axial voneinander beabstandeten Teilen aufweist, die einen ersten zylindrischen axialen Teil (14), der mit einem Gewinde versehen ist und mit der Gewindeinnenfläche (11) des zweiten Teils (3) in Eingriff steht, und einen zweiten axialen Teil (15), der polygonal ist und mit der polygonalen Innenfläche des Reibungselements (5) in Eingriff steht, enthalten.

16. Spannvorrichtung nach Anspruch 7, und weiterhin mit einem ersten Verbindungsmittel (11, 14) zum derartigen Verbinden des ersten Teils (4) mit dem zweiten Teil (3), daß sich das zweite Teil (3) um die Achse bewegt, und einem zweiten Verbindungsmittel (16, 18), das axial von dem ersten Verbindungsmittel (11, 14) beabstandet ist und das erste Teil (4) derart mit dem Reibungselement (5) verbindet, daß sich das erste Teil (4) in die Axialrichtung bewegt.

17. Spannvorrichtung nach Anspruch 7, bei der, wenn das erste (4) und/oder zweite (3) Teil von einem Werkzeug in Eingriff genommen und festgehalten werden bzw. wird, das andere der Teile (3, 4) auch von diesem in Eingriff genommen und gedreht werden kann.

## Revendications

1. Procédé pour allonger et détendre un goujon (1) ayant un axe et disposé dans un objet (2), le procédé comprenant les étapes consistant à connecter le goujon (1) à une première partie (4) d'un dispositif tendeur qui n'est susceptible de se déplacer que dans une direction axiale du goujon de manière à tirer le goujon (1) dans la direction axiale pour allonger le goujon (1) et pour ainsi le tendre dans l'objet (2) ou pour réduire la traction sur le goujon et détendre ainsi le goujon (1); et à déplacer la première partie (4) uniquement dans la direction axiale en connectant la première partie (4) à une deuxième partie (3) du dispositif tendeur, susceptible de tourner autour dudit axe; à engager un élément de frottement (5) avec au moins l'une des première et deuxième parties (3, 4) de sorte que l'une des parties (4) ait une résistance de frottement au mouvement supérieure à l'autre des parties (3) et de sorte que la deuxième partie (3) ne soit pas engagée fermement avec l'élément de frottement (5) mais soit au contraire librement rotative par rapport à l'élément de frottement (5) tout en venant librement en butée contre ce dernier (5); et à appliquer une force sur au moins l'une des parties (3, 4) du dispositif tendeur, grâce à quoi la deuxième partie (3) est tournée et la première partie (4) est déplacée uniquement dans la direction axiale pour déplacer le goujon (1) dans la direction axiale de manière à allonger le goujon (1) et à appliquer à l'objet (2) une force de serrage de sorte que les deux parties (3, 4), le goujon (1) et l'élément de frottement (5) ne puissent pas tourner ou se déplacer axialement par rapport à la surface d'un objet (2) et vice versa, et qu'une structure unitaire soit produite avec tous les composants qui sont serrés les uns avec les autres de manière immobile, caractérisé en ce qu'une force de retenue est appliquée à la première partie (4) par l'intermédiaire d'un premier moyen d'engagement (13) au niveau d'une portion d'extrémité de la première partie espacée de l'élément de frottement (5) et simultanément qu'une force active opposée est appliquée à la deuxième partie (3) par l'intermédiaire d'un deuxième moyen d'engagement (8) sur la deuxième partie.

2. Procédé selon la revendication 1, dans lequel la connexion de la première partie (4) au goujon (1) est effectuée par un premier moyen de filetage (17) et la connexion de la deuxième partie (3) à la première partie (4) est effectuée par un deuxième moyen de filetage.

3. Procédé selon la revendication 1, et comprenant en outre l'étape consistant à disposer l'élément de frottement (5) entre l'objet (2) et une portion d'extrémité de la deuxième partie (3) qui fait face à l'objet (2) de sorte que l'élément de frottement (5) entoure une portion d'extrémité (15) de la première partie (4) qui fait face à l'objet (2).

4. Procédé selon la revendication 1, dans lequel ladite force active est appliquée en engageant la deuxième partie (3) avec un outil et en déplaçant la deuxième partie (3) avec un outil autour dudit axe.

5. Procédé selon la revendication 1, dans lequel la force de retenue est appliquée en engageant la première partie (4) avec un outil et en retenant la première partie (4) de manière immobile en rotation.

6. Procédé selon la revendication 1, et comprenant en outre l'étape consistant à fournir des premiers moyens de connexion (11, 14) pour connecter la première partie (4) à la deuxième partie (3) de sorte que la deuxième partie (3) se déplace autour dudit axe, et des deuxièmes moyens de connexion (16, 18) espacés axialement du premier moyen de connexion (11, 14) et connectant la première partie (4) à l'élément de frottement (5) de sorte que la première partie (4) ne se déplace que dans la direction axiale.

7. Dispositif tendeur mécanique pour allonger et détendre un goujon (1) ayant un axe et disposé dans un objet (2), lequel dispositif comprend une première partie (4) susceptible d'être connectée audit goujon (1) pour tirer ledit goujon (1) et, de manière mobile uniquement dans une direction axiale, pour allonger ledit goujon (1) et pour ainsi le tendre dans ledit objet (2), ou pour détendre ledit goujon (1); et un moyen pour déplacer ladite première partie (4) dans la direction axiale et comportant une deuxième partie (3) connectée à ladite première partie (4) et susceptible de tourner autour dudit axe, et un élément de frottement (5) qui engage au moins l'une desdites parties (3, 4) de manière à augmenter la résistance due au frottement entre lesdites parties (3, 4) de sorte que l'une desdites parties (4) ait une résistance de frottement au mouvement supérieure à l'autre desdites parties (3), ladite deuxième partie (3) n'étant pas engagée fermement avec ledit élément de frottement (5) mais étant librement rotative par rapport audit élément de frottement (5) tout en venant librement en butée contre ce dernier (5), de sorte que lorsqu'une force de rotation est appliquée à au moins l'une desdites parties (3, 4), ladite deuxième partie (3) tourne et ladite première partie (4) se déplace uniquement dans ladite direction axiale pour déplacer ledit goujon (1) dans ladite direction axiale de manière à allonger ledit goujon (1) et à appliquer à l'objet (2) une force de serrage de sorte que les deux parties (3, 4), le goujon (1) et l'élément de frottement (5) ne puissent pas tourner ou se déplacer axialement par rapport à l'objet (2) et vice versa, et qu'une structure unitaire soit produite avec tous les composants, qui sont serrés les uns aux autres de manière immobile, caractérisé en ce que ladite première partie (4) a un premier moyen d'engagement (13) au niveau d'une portion d'extrémité de la première partie espacée de l'élément de frottement (5), par l'intermédiaire duquel premier moyen d'engagement une force de retenue peut être appliquée à la première partie (4), et en ce que ladite deuxième partie (3) a un deuxième moyen d'engagement (8) sur celle-ci, par l'intermédiaire duquel une force active opposée peut simultanément être appliquée à la deuxième partie (3).

8. Dispositif tendeur selon la revendication 7, et comprenant en outre un premier moyen de connexion (17) qui connecte ladite première partie (4) au goujon (1) et des deuxièmes moyens de connexion (11, 14) qui connectent ladite deuxième partie (3) à ladite première partie (4), lesdits moyens de connexion étant formés en tant que filetages (17; 11, 14) ayant des sens opposés.

9. Dispositif tendeur selon la revendication 7, dans lequel ledit élément de frottement (5) a un premier moyen (18) formé de telle sorte que ladite première partie (4) se déplace dans ladite direction axiale par rapport audit élément de frottement (5) et ne tourne pas par rapport audit élément de frottement (5), et un deuxième moyen (19) formé de telle sorte que ladite deuxième partie (3) puisse tourner par rapport audit élément de frottement (5) mais que ledit deuxième moyen (19) stoppe le mouvement de ladite deuxième partie (3) en engageant ledit élément de frottement (5) dans ladite direction axiale.

10. Dispositif tendeur selon la revendication 9, dans lequel ledit premier moyen (18) dudit élément de frottement (5) comporte une pluralité de cannelures (18) s'étendant dans une direction axiale.

11. Dispositif tendeur selon la revendication 9, dans lequel ledit deuxième moyen dudit élément de frottement (5) comporte une surface de butée (19) en regard de ladite deuxième partie (3) de sorte que ladite deuxième partie (3) vienne en butée contre ladite surface de butée (19) lorsqu'elle est déplacée dans ladite direction axiale sur ledit élément de frottement (5).

12. Dispositif tendeur selon la revendication 7, dans lequel chacune desdites parties (3, 4) a une portion d'extrémité (9, 15) disposée de manière à faire face à l'objet (2), ledit élément de frottement (5) étant situé entre ladite portion d'extrémité (9) de ladite deuxième partie (3) et l'objet (2) et entoure ladite portion d'extrémité (15) de ladite première partie (4).

13. Dispositif tendeur selon la revendication 7, dans lequel le moyen d'engagement de la deuxième partie (3) comprend un moyen (8) pouvant être engagé par un outil, pour déplacer ladite deuxième partie (3) autour dudit axe.

14. Dispositif tendeur selon la revendication 7, dans lequel le premier moyen d'engagement de la première partie (4) comprend un moyen (13) pouvant être engagé par un outil, de manière à au moins retenir ladite première partie (4) immobile en rotation.

15. Dispositif tendeur selon la revendication 7, dans lequel ladite deuxième partie (3) a une surface interne filetée (11), ledit élément de frottement (5) ayant une surface interne polygonale, ladite première partie (4) ayant une surface externe avec deux portions espacées axialement comportant une première portion axiale cylindrique (14) qui est filetée et s'engage avec ladite surface interne filetée (11) de ladite deuxième partie (3) et une deuxième portion axiale (15) qui est polygonale et s'engage avec ladite surface interne polygonale dudit élément de frottement (5).

16. Dispositif tendeur selon la revendication 7, et comprenant en outre des premiers moyens de connexion (11, 14) destinés à connecter ladite première partie (4) à ladite deuxième partie (3) de telle sorte que ladite deuxième partie (3) se déplace autour dudit axe; et des deuxièmes moyens de connexion (16, 18) espacés axialement desdits premiers moyens de connexion (11, 14) et connectant ladite première partie (4) audit élément de frottement (5) de sorte que ladite première partie (4) se déplace dans ladite direction axiale.

17. Dispositif tendeur selon la revendication 7, dans lequel lorsqu'au moins l'une desdites première et deuxième parties (3, 4) est engagée et retenue par un outil, l'autre desdites parties (4, 3) peut également être engagée et tournée par celui-ci.
